# EUROPÄISCHE PATENTSCHRIFT

(11) **EP 0 382 916 B1**
(45) Veröffentlichungstag und Bekanntmachung des Hinweises auf die Patenterteilung: **08.09.1993**
(21) Anmeldenummer: 89122752.2
(22) Anmeldetag: 09.12.1989
(51) Int. Cl.: H02G 9/06, H02G 3/04

(54) **Rohraggregat für die Aufnahme von Kabeln**
Piping assembly for the receipt of cables
Ensemble de tuyaux formant un conduit de câbles

(30) Priorität: 17.02.1989 DE 3904828
(43) Veröffentlichungstag der Anmeldung: 22.08.1990
(73) Patentinhaber: Dipl.-Ing. Dr. Ernst Vogelsang GmbH & Co. KG, D-45699 Herten (DE)
(72) Erfinder: Vogelsang, Horst, D-4352 Herten (DE)
(74) Vertreter: Andrejewski, Walter

(56) Entgegenhaltungen:
- EP-A- 0 231 504
- AT-B- 373 737

## Beschreibung

Die Erfindung bezieht sich auf ein Rohraggregat für die Aufnahme von Kabeln aus stranggepreßten Kunststoffrohren, die durch angeformte flexible Abstandsstege zu einem zur unmittelbaren Erdreichverlegung bestimmten Rohrbündel aus aneinanderliegenden Kunststoffrohren spalt- und freiraumbildend zusammenlegbar sind. Die einzelnen Kunststoffrohre des Rohrbündels können runden oder viereckigen Querschnitt aufweisen. Das Rohrbündel hat Spalträume und kann außerdem Freiräume zwischen benachbarten Kunststoffrohren sowie zwischen den Verbindungsrohren und den Abstandsstegen aufweisen, die bei der Bündelung entstehen, wenn sich die Außenquerschnitte der einzelnen Rohre nicht zu einem z. B. wabenartig komplementären Bündelquerschnitt zusammensetzen. Das Rohraggregat kann jedoch auch so eingerichtet sein, daß das zusammengelegte Rohrbündel zwar Spalträume, aber Freiräume nicht aufweist. Im allgemeinen bilden vier Kunststoffrohre ein Rohraggregat und damit ein Rohrbündel. Ein Rohraggregat kann aber auch mehr als vier Kunststoffrohre aufweisen. Die Kunststoffrohre eines Rohraggregates können alle gleichen oder unterschiedlichen Durchmesser besitzen. - Es versteht sich, daß das Rohrbündel aus den unter Verformung der Abstandsstege zusammengelegten Kunststoffrohren fixiert werden muß. Das kann z. B. durch Umreifung oder durch angeformte Verschlußelemente an den Kunststoffrohren, die im zusammengelegten Rohrbündel in bezug auf den Umfang abstandsstegfrei aneinanderstoßen, geschehen.

Bei dem aus der Praxis bekannten Rohraggregat, von dem die Erfindung ausgeht (vgl. DE-PS 36 03 849), sind die Abstandsstege geschlossene Stege. Andererseits entsteht beim Zusammenlegen der Kunststoffrohre zum Rohraggregat an der Stelle, an der die gleichsam äußeren Kunststoffrohre des Rohraggregates umfangsmäßig abstandsstegfrei aneinanderstoßen, ein Spalt, und zwar unabhängig davon, ob die Fixierung der Kunststoffrohre zum Rohrbündel durch Umreifung oder mit Hilfe von Verschlußelementen erfolgt. Infolge dieses Spaltes kann bei unmittelbarer Erdreichverlegung in das Erdreich eindringendes Wasser auch in die Spalt- und Freiräume des Rohrbündels eintreten. Das Rohrbündel kann dadurch gleichsam zu einem Drainagerohr werden, was stört, zumal die Rohrbündel im allgemeinen von einem Kabelschacht ausgehen oder in einen Kabelschacht einmünden, so daß das in das Rohrbündel eingedrungene Wasser in einen Kabelschacht eintreten könnte, was außerordentlich stört.

Das Dokument AT-B-373 737 beschreibt ein Rohraggregat bei welchem die Stege zwischen den Einzelrohren mit Schlitzen versehen sind. Damit wird die Abtrennung einzelner oder mehrerer Rohre vorbereitet. Zur unmittelbaren Endreichverlegung ist jedoch dieses Rohraggregat nicht vorgesehen.

Der Erfindung liegt die Aufgabe zugrunde, ein Rohraggregat des eingangs beschriebenen Aufbaus so weiter auszubilden, daß das entsprechende Rohrbündel nicht mehr in unerwünschter Weise zu einem Drainagerohr werden kann.

Zur Lösung dieser Aufgabe lehrt die Erfindung, daß die Abstandsstege Löcher oder Schlitze aufweisen, die groß genug sind, um Wasser eintreten und austreten zu lassen, und daß im zusammengelegten Rohrbündel (im verlegten Zustand) ein Abstandssteg den tiefsten Bereich des durch die Spalt- und Freiräume entstandenen Rohrbündelinnenraumes bildet. Die Löcher oder Schlitze können auf verschiedene Weise hergestellt sein, im einfachsten Falle sind die Löcher oder Schlitze ausgestanzt. Es empfiehlt sich, die Löcher oder Schlitze bis an die anschließenden Rohrwandungen zu führen.

Die Erfindung geht von der Erkenntnis aus, daß Rohrbündel für die Aufnahme von Kabeln im allgemeinen im Erdreich nicht in Tiefen verlegt werden, in denen Grundwasser mit dem entsprechenden hydrostatischen Druck ansteht. Sie werden vielmehr regelmäßig in Tiefen verlegt, die von eindringendem Oberflächenwasser lediglich durchsickert wird. Zwar kann bei einem Rohrbündel, welches aus einem erfindungsgemäßen Rohraggregat hergestellt ist, dieses Sickerwasser in die Spalträume und Freiräume des Rohrbündels eindringen. Überraschenderweise tritt es aber über die Löcher oder Schlitze in dem Abstandssteg im tiefsten Bereich des Rohrbündelinnenraumes wieder aus. Das wird auf die Kapillarwirkung des umgebenden Erdreiches zurückgeführt, welches auch an den Löchern und Schlitzen ansteht. Es versteht sich, daß die Löcher oder Schlitze zwar groß genug sind, um Wasser eintreten zu lassen, sie sind jedoch zweckmäßigerweise unter Berücksichtigung der Körnung des Erdreiches so eingerichtet, daß Erdreich nicht eindringen kann.

Im folgenden wird die Erfindung anhand einer lediglich ein Ausführungsbeispiel darstellenden Zeichnung ausführlicher erläutert. Es zeigen
- Fig. 1: perspektivisch einen Ausschnitt aus einem erfindungsgemäßen Rohraggregat,
- Fig. 2: das aus dem Rohraggregat der Fig. 1 zusammengelegte Rohrbündel, stirnseitig,
- Fig. 3: eine andere Ausführungsform des Gegenstandes der Fig. 1, und
- Fig. 4: entsprechend der Fig. 2 das Rohrbündel aus dem Rohraggregat der Fig. 3.

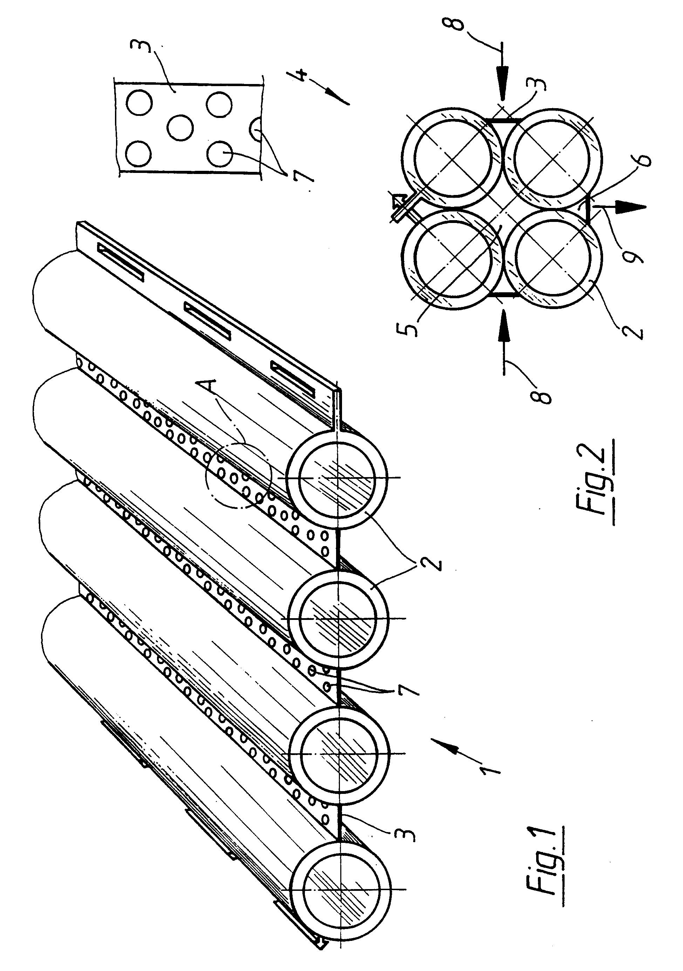

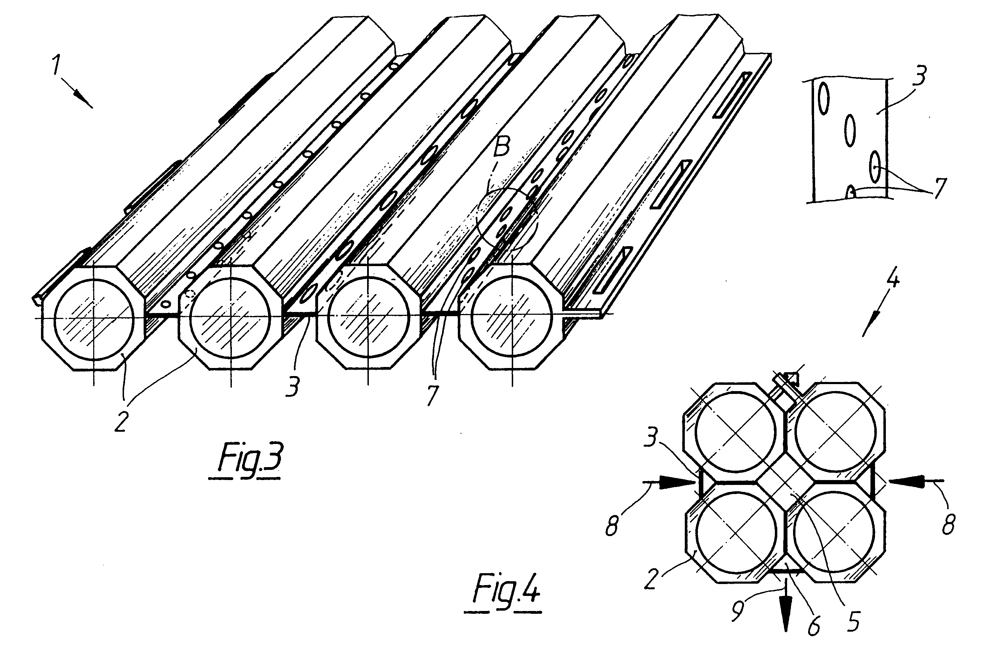

Die in den Figuren dargestellten Rohraggregate 1 sind für die Aufnahme von Kabeln bestimmt und bestehen aus stranggepreßten Kunststoffrohren 2, die durch angeformte flexible Abstandsstege 3 zu einem zur unmittelbaren Erdreichverlegung bestimmten Rohrbündel 4 aus aneinanderliegenden Kunststoffrohren zusammenlegbar sind, wie es die Fig. 2 und 4 verdeutlichen. Es versteht sich, daß bei einem solchen Zusammenlegen zwischen den Rohren bzw. zwischen den Rohren und Abstandsstegen Spalträume 5 und Freiräume 6 entstehen.

Aus den Fig. 1 und 3 entnimmt man, daß die Abstandsstege 3 Löcher oder Schlitze 7 aufweisen. Diese sind groß genug, um Wasser eintreten zu lassen. Die Anordnung ist so getroffen, daß im zusammengelegten und verlegten Rohrbündel 4 ein Abstandssteg 3 den tiefsten Bereich des durch die Spalträume 5 und Freiräume 6 entstandenen Rohrbündelinnenraumes bildet. Dazu wird auf die Fig. 2 und 4 verwiesen.

In dem vergrößerten Ausschnitt A aus Fig. 1 sowie in dem vergrößerten Ausschnitt B aus Fig. 3 erkennt man, daß die Löcher oder Schlitze 7 bis an die anschließenden Rohrwandungen geführt sind.

Die Fig. 2 und 4 machen deutlich, daß das nach Maßgabe der Erfindung verlegte Rohrbündel 4 in Richtung der Pfeile 8 zwar Sickerwasser aus umgebendem Erdreich eintreten läßt, weil die Abstandsstege 3 Löcher oder Schlitze 7 aufweisen, jedoch tritt das Wasser aus den Löchern oder Schlitzen in dem Abstandssteg 3, der im tiefsten Bereich des Rohrbündelinnenraumes angeordnet ist, wieder aus, wie der Pfeil 9 andeutet. Das Rohrbündel 4 funktioniert in einem solchen Erdreich nicht mehr als Drainagerohr.

## Patentansprüche

1. Rohraggregat für die Aufnahme von Kabeln aus stranggepreßten Kunststoffrohren (2), die durch angeformte flexible Abstandsstege (3) zu einem zur unmittelbaren Erdreichverlegung bestimmten Rohrbündel (4) aus aneinanderliegenden Kunststoffrohren spalt- und freiraumbildend zusammenlegbar sind, **dadurch gekennzeichnet**, daß die Abstandsstege (3) Löcher oder Schlitze (7) aufweisen, die groß genug sind, um Wasser eintreten und austreten zu lassen, und daß im zusammengelegten Rohrbündel ein Abstandssteg den tiefsten Bereich des durch die Spalt-und Freiräume (5,6) entstandenen Rohrbündelinnenraumes bildet.

2. Rohraggregat nach Anspruch 1, dadurch gekennzeichnet, daß die Löcher oder Schlitze (7) in die Abstandsstege eingestanzt sind.

3. Rohraggregat nach einem der Ansprüche 1 oder 2, dadurch gekennzeichnet, daß die Löcher oder Schlitze (7) bis an die anschließenden Rohrwandungen geführt sind.

## Claims

1. A pipe unit for accommodating cables, comprising extruded plastic pipes (2) which can be folded by means of flexible spacer webs (3) formed thereon, with the formation of spatial gaps and clearances, to form a pipe bundle (4) comprising adjacent plastic pipes and intended for laying directly in the ground, characterised in that the spacer webs (3) have holes or slots (7) which are large enough to permit water to enter and escape, and that in the folded pipe bundle one spacer web forms the lowest region of the internal space of the pipe bundle which is formed by the spatial gaps and clearances (5, 6).

2. A pipe unit as in Claim 1, characterised in that the holes or slots (7) are punched into the spacer webs (3).

3. A pipe unit as in Claim 1, characterised in that the holes or slots (7) extend as far as the adjoining pipe walls.

## Revendications

1. Dispositif à tubes servant à loger des câbles et constitué par des tubes en matière plastique extrudés (2), qui peuvent être réunis, de manière à former des fentes et des espaces libres, par des barrettes entretoises flexibles moulées (3) pour former un faisceau de tubes (4), qui est destiné à être placé directement dans le sol et est constitué de plusieurs tubes en matière plastique juxtaposés, caractérisé en ce que les barrettes entretoises (3) comportent des trous ou des fentes (7), qui sont d'une taille suffisamment importante pour permettre la pénétration et la sortie de l'eau, et que dans le faisceau de tubes à l'état assemblé, une barrette entretoise délimite la partie la plus basse de l'espace intérieur du faisceau de tubes, qui est formé par les espaces en forme de fentes et les espaces vides (5,6).

2. Dispositif à tubes selon la revendication 1, caractérisé en ce que les trous ou les fentes (7) sont découpés dans des barrettes entretoises.

3. Dispositif à tubes selon l'une des revendications 1 ou 2, caractérisé en ce que les trous ou les fentes (7) s'étendent jusqu'à proximité des parois adjacentes des tubes.
